# EUROPÄISCHE PATENTANMELDUNG

(11) **EP 1 445 718 A1**
(43) Veröffentlichungstag der Anmeldung: **11.08.2004**
(21) Anmeldenummer: 03002931.8
(22) Anmeldetag: 10.02.2003
(51) Int. Cl.: G06F 17/60

(54) **Verfahren zur Bestandserfassung und/oder-überwachung von aufbewahrten Gegenständen und/oder Gütern, Ressourcenplanungssystem, Computerprogramm für Ressourcenplanungssystem und Computerprogramm für Sensoreinrichtung**

(71) Anmelder: SIEMENS AKTIENGESELLSCHAFT, 80333 München (DE)
(72) Erfinder: Burkert, Wolf-Dieter, 83024 Rosenheim (DE); Koch, Alfred, 95478 Kemnath (DE); Sammer, Gerhard, 84061 Ergoldsbach (DE); Schuster, Rolf, 86157 Augsburg (DE); Shah, Krishna, 82166 Gräfelfing (DE)

(57) **Zusammenfassung**

Zur Bestandserfassung und/oder -überwachung von aufbewahrten Gegenständen und/oder Gütern, wird einem aufbewahrten Gegenstand und/oder Gut ein Aufbewahrungsort und/oder optisch abtastbarer Identifikator zugeordnet, durch den der Gegenstand und/oder das Gut identifizierbar ist. Zu einem vorgebbaren Zeitpunkt wird ein elektronisches Bild zur Ermittlung einer Belegung des Aufbewahrungsorts und/oder zur Abtastung des Identifikators erfaßt. Ein das erfaßte elektronische Bild kennzeichnendes Signal wird über eine Mobilkommunikationsschnittstelle an eine Auswerteeinrichtung übermittelt. Anhand des übermittelten Signals wird ein dem Aufbewahrungsort und/oder Identifikator zugeordneter Bestandsindikator durch die Auswerteeinrichtung angepaßt.

## Beschreibung

Aus US 5,278,750 ist ein Verfahren zur Erstellung eines Produktionsplans für einen ausgewählten Produktionsprozeß bekannt, aus dem eine Vielzahl an Produkten hervorgeht, die an einen nachgelagerten Be- bzw. Verarbeitungsprozeß übergeben werden. Bei der Durchführung des Verfahrens wird zunächst ein Ablaufplan für den nachgelagerten Be- bzw. Verarbeitungsprozeß erfaßt, der Angaben über benötigte Produkte und Lieferzeitpunkte umfaßt. Außerdem wird ein Ablaufplan für einen Transportprozeß vom ausgewählten Produktionsprozeß zum nachgelagerten Be- bzw. Verarbeitungsprozeß erfaßt. Die dem Transportprozeß zugeführten Produkte werden mit einem Begleitzettel versehen, der nachfolgend KANBAN genannt wird und Lieferangaben enthält. Anhand der Ablaufpläne für den nachgelagerten Be- bzw. Verarbeitungsprozeß und den Transportprozeß und anhand des KANBANs wird ein Produktversendeplan erstellt. Des weiteren werden Arbeits- und Produktionsbedingungen für den ausgewählten Produktionsprozeß erfaßt. Anhand des Produktversendeplans und anhand der erfaßten Arbeits- und Produktionsbedingungen wird ein Produktionsplan für den ausgewählten Produktionsprozeß erstellt. Abschließend werden Produktionsaufträge über herzustellende Produkte anhand des Produktionsplans für den ausgewählten Produktionsprozeß erstellt.

In DE 100 41 398 A1 ist ein Verfahren zur Bedarfsermittlung von Bauteilen an einem Arbeitsplatz beschrieben, bei dem eine Anzahl an Vorratsbehältern je Bauteiltyp an einem Arbeitsplatz elektronisch mittels Sensoren abgefragt wird. Sobald sich die Anzahl der Vorratsbehälter an einem Arbeitsplatz verringert, wird von einem Computer ein Bedarfssignal erzeugt. Durch das Bedarfssignal wird ein Zählerstand eines bauteilspezifischen Bedarfszählers erhöht, worauf eine dem Zählerstand entsprechende Anzahl von Vorratsbehältern an den Arbeitsplatz transportiert wird.

KANBAN-basierte Produktionsplanungs- und -steuerungsverfahren bieten beispielsweise einen minimierten zentralen Steuerungsaufwand, verkürzte Prozeßdurchlaufzeiten und niedrigere Lagerbestände als Vorteile. Von großer Bedeutung für einen effizienten Verfahrensablauf ist insbesondere eine genaue und schnelle Lagerbestandsermittlung.

Der vorliegenden Erfindung liegt daher die Aufgabe zugrunde, ein Verfahren zur personenunabhängigen Bestandsverwaltung von aufbewahrten Gegenständen und/oder Gütern sowie zur Durchführung des Verfahrens geeignete Vorrichtungen zu schaffen.

Erfindungsgemäß wird diese Aufgabe durch ein Verfahren mit den in Anspruch 1 angegebenen Merkmalen, ein Ressourcenplanungsystem mit den in Anspruch 8 und ein Computerprogramm für ein Ressourcenplanungssystem bzw. eine Sensoreinrichtung mit den in Anspruch 9 bzw. 10 angegebenen Merkmalen gelöst. Vorteilhafte Ausgestaltungen der vorliegenden Erfindung sind in den abhängigen Ansprüchen angegeben.

Ein wesentlicher Aspekt der vorliegenden Erfindung besteht darin, daß einem aufbewahrten Gegenstand bzw. Gut ein Aufbewahrungsort bzw. ein optisch abtastbarer Identifikator zugeordnet ist, durch den der Gegenstand bzw. das Gut identifizierbar ist. Zur Ermittlung einer Belegung des Aufbewahrungsorts bzw. zur Abtastung des Identifikators wird zu einem vorgebbaren Zeitpunkt ein elektronisches Bild erfaßt. Ein das erfaßte elektronische Bild kennzeichnendes Signal wird an eine Auswerteeinrichtung übermittelt, durch die anhand des übermittelten Signals ein dem Aufbewahrungsort bzw. Identifikator zugeordneter Bestandsindikator angepaßt wird. Aus diesem Bestandsindikator kann ein Bestand an jeweiligen Gegenständen bzw. Gütern abgeleitet werden, ohne daß es hierzu eines manuellen Eingriffs von Bedien- oder Bestandsverwaltungspersonal bedarf.

Anforderungen an eine elektronische Bilderfassung sind bei der vorliegenden Erfindung als gering anzusehen, da beispielsweise bereits eine Realisierung von Hell-/Dunkel-Unterscheidungen ausreichend ist.

Die vorliegende Erfindung wird nachfolgend an einem Ausführungsbeispiel anhand der Zeichnung näher erläutert. Es zeigt
Figur 1 ein Ablaufdiagramm für ein Verfahren zur Bestandsüberwachung bzw. -erfassung,
Figur 2 eine schematische Darstellung eines Anwendungsumfeldes für die vorliegende Erfindung.

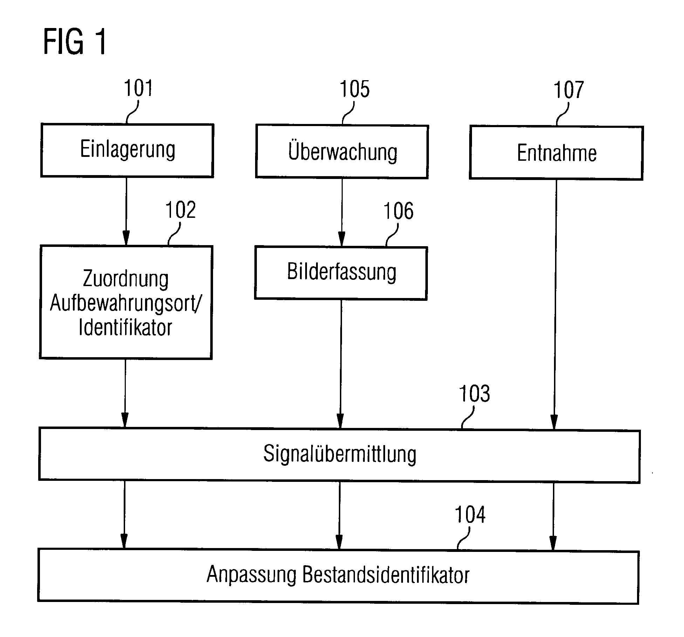

Ausgangspunkt des in Figur 1 dargestellten Ablaufdiagramms für ein Verfahren zur Bestandsüberwachung bzw. -erfassung ist eine Einlagerung eines aufzubewahrenden Gegenstandes bzw. Gutes am Aufbewahrungsort (Schritt 101). Nachfolgend wird der aufbewahrte Gegenstand bzw. das aufbewahrte Gut dem Aufbewahrungsort bzw. einem optisch abtastbaren Identifikator am Gegenstand bzw. Gut zugeordnet (Schritt 102). Ein diesen Vorgang kennzeichnendes Signal wird über eine Mobilkommunikationsschnittstelle an eine Auswerteeinrichtung übermittelt (Schritt 103). Abschließend wird anhand des übermittelten Signals ein dem Aufbewahrungsort bzw. Identifikator zugeordneter Bestandsindikator durch die Auswerteeinrichtung angepaßt (Schritt 104). Aus diesem Bestandsindikator kann ein Bestand an jeweiligen Gegenständen bzw. Gütern abgeleitet werden.

Bei einer Überwachung eines Bestandes von aufbewahrten Gegenständen bzw. Gütern (Schritt 105) wird zu einem vorgebbaren Zeitpunkt ein elektronisches Bild zur Ermittlung einer Belegung des jeweiligen Aufbewahrungsortes bzw. zur Abtastung des Identifikators am jeweiligen Gegenstand bzw. Gut erfaßt (Schritt 106). Danach wird ein das erfaßte elektronische Bild kennzeichnendes Signal über eine Mobilkommunikationsschnittstelle an eine Auswerteeinrichtung übermittelt (Schritt 103). Analog zur Vorgehensweise bei einer Einlagerung eines aufzubewahrenden Gegenstandes bzw. Gutes wird abschließend ein dem Aufbewahrungsort bzw. Identifikator zugeordneter Bestandsindikator anhand des übermittelten Signals durch die Auswerteeinrichtung angepaßt (Schritt 104).

Bei einer Entnahme eines aufbewahrten Gegenstandes bzw. Gutes (Schritt 107) wird ein diesen Vorgang kennzeichnendes Signal über eine Mobilkommunikationsschnittstelle an die Auswerteeinrichtung übermittelt (Schritt 103). Abschließend wird wiederum der Bestandsindikator anhand des übermittelten Signals durch die Auswerteeinrichtung angepaßt (Schritt 104).

Insbesondere kann eine Bestandsermittlung anhand von Angaben über einen Aufbewahrungsort, eine Anzahl von Aufbewahrungseinrichtungen am Aufbewahrungsort und eine Anzahl von Gegenständen je Aufbewahrungseinrichtung erfolgen. Dies gilt beispielsweise bei Stückgütern. Bei Schüttgütern kann eine Bestandsermittlung beispielsweise anhand von Angaben über einen Aufbewahrungsort, eine Anzahl von Aufbewahrungseinrichtungen am Aufbewahrungsort und einen Füllstand einer Aufbewahrungseinrichtung erfolgen. Zur Ermittlung des Füllstandes einer zumindest teilweise transparenten Aufbewahrungseinrichtung wird eine Hell-/Dunkel-Grenze zwischen einem gefüllten und einem leeren Teilbereich der zumindest teilweise transparenten Aufbewahrungseinrichtung mittels einer elektronischen Kamera erfaßt.

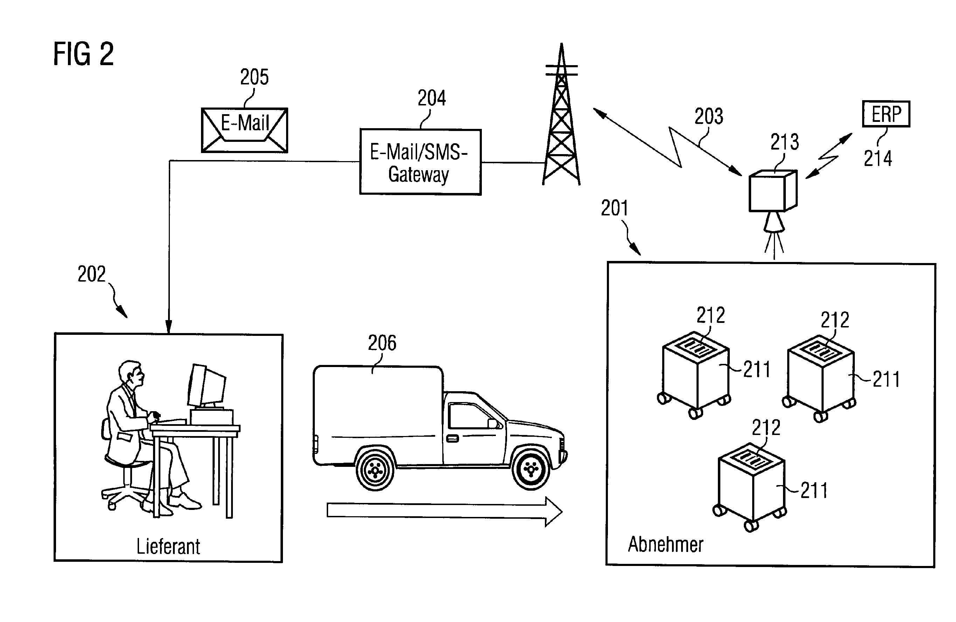

Bei dem in Figur 2 schematisch dargestellten Anwendungsumfeld für die vorliegende Erfindung befinden sich in einem Lager 201 für Gegenstände bzw. Güter eines Abnehmers mehrere Aufbewahrungseinrichtungen 211 für aufzubewahrende Gegenstände bzw. Güter. Diese Aufbewahrungseinrichtungen 211 sind mit einem optisch abtastbaren Identifikator 212 versehen, beispielsweise einem Barcode oder einem Transport- oder Lagerschein. Ein Transport- oder Lagerschein kann mittels optischer Zeichenerkennung (OCR - optical character recignition) erfaßt und ausgewertet werden.

Die an den Aufbewahrungseinrichtungen 211 vorgesehenen Indentifikatoren 212 werden von einer rechnergestützten Sensoreinrichtung 213 erfaßt, welche über eine integrierte elektronische Kamera und ein integriertes Mobilkommunikationsgerät verfügt. In einen Arbeitsspeicher der rechnergestützten Sensoreinrichtung 213 ist ein Computerprogramm ladbar das zumindest einen Codeabschnitt aufweist, bei dessen Ausführung eine Erfassung eines elektronischen Bildes zur Ermittlung einer Belegung eines Aufbewahrungsortes bzw. zur Abtastung eines Identifikators zu einem vorgebbaren Zeitpunkt durchgeführt und eine Übermittlung eines das elektronische Bild kennzeichnenden Signals über eine Mobilkommunikationsschnittstelle 203 an eine Auswerteeinrichtung 202 veranlaßt wird. Die Auswerteeinrichtung 202 ist im vorliegenden Fall einem Lieferanten zugeordnet.

Die rechnergestützte Sensoreinrichtung 213 wird durch ein Ressourcenplanungssystem 214 angesteuert, das über eine in Figur 2 nicht näher dargestellte Prozessoreinheit und einen Arbeitsspeicher verfügt. Außerdem wird durch das Ressourcenplanungssystem 214 eine Zuordnung eines aufbewahren Gegenstandes bzw. Gutes zu einem Aufbewahrungsort bzw. optisch abtastbaren Identifikator 212, eine Erfassung eines elektronischen Bildes durch die Kamera der rechnergestützten Sensoreinrichtung 213, eine Übermittlung eines das erfaßte elektronische Bild kennzeichnenden Signals an die Auswerteeinrichtung 202 und eine Anpassung eines dem Aufbewahrungsort bzw. Identifikator 212 zugeordneten Bestandsindikators durch die Auswerteeinrichtung 202 veranlaßt. Zur Durchführung dieser Schritte ist im Ressourcenplanungssystem 214 ein Computerprogramm installiert, das in den Arbeitsspeicher des Ressourcenplanungssystems ladbar ist und zumindest einen Codeabschnitt aufweist, bei dessen Ausführung die Zuordnung des Aufbewahrungsortes bzw. optisch abtastbaren Identifikator erfolgt und die Erfassung des elektronischen Bildes, die Übermittlung des das erfaßte elektronische Bild kennzeichnenden Signals sowie die Anpassung des Bestandsindikators veranlaßt wird, wenn das Computerprogramm in dem Ressourcenplanungssystem abläuft.

Das Signal, welches das durch die elektronische Kamera der rechnergestützten Sensoreinrichtung 213 erfaßte Bild kennzeichnet, wird zunächst als Kurznachricht (SMS) über die Mobilkommunikationsschnittstelle 203 übermittelt und anschlieβend in einem E-Mail/SMS-Gateway 204 in eine E-Mail-Nachricht 205 umgewandelt sowie an die Auswerteeinrichtung 202 auf Lieferantenseite übermittelt. Auf Basis einer aktuellen Gegenstands- bzw. Güterverfügbarkeit auf Lieferantenseite bzw. auf Basis eines Verbrauchs auf Abnehmerseite erfolgt eine bedarfsbezogene Nachversorgung des Abnehmers mit jeweils benötigten Gegenständen bzw. Gütern. Die verbrauchsbezogene Nachversorgung wird beispielsweise über Transportmittel 206 wie Lastkraftwagen, Bahn oder Flugzeug realisiert. Abnehmer- und Lieferantenseite sind für die verbrauchsbezogene Nachversorgung des Abnehmers mit benötigten Gegenständen bzw. Gütern über einen KANBAN-Regelkreis gekoppelt.

Bei dem in Figur 2 dargestellten Anwendungsumfeld kommt der rechnergestützten Sensoreinrichtung 213 die Aufgabe zu, eine Erfassung, Ermittlung und Plausibilisierung ereignisbezogener Bestände, Zeiten und Veränderungen im Hinblick auf Mengen/bandbreiten, Lieferzeit/-bandbreiten, Verbrauchsrate und Aufbewahrungsort vorzunehmen. Hierzu meldet die rechnergestützte Sensoreinrichtung 213 entsprechende Ereignisse an Disponenten bzw. Logistiker auf Lieferanten- und Abnehmerseite. Dies schließt auch Ressourcenplanungssysteme (Enterprise Resource Planning Systems) auf Lieferanten- und Abnehmerseite ein.

Die Anwendung der vorliegenden Erfindung ist nicht auf das hier beschriebene Ausführungsbeispiel beschränkt.

## Patentansprüche

1. Verfahren zur Bestandserfassung und/oder -überwachung von aufbewahrten Gegenständen und/oder Gütern, bei dem
- einem aufbewahrten Gegenstand und/oder Gut ein Aufbewahrungsort und/oder optisch abtastbarer Identifikator zugeordnet ist, durch den der Gegenstand und/oder das Gut identifizierbar ist,
- zu einem vorgebbaren Zeitpunkt ein elektronisches Bild zur Ermittlung einer Belegung des Aufbewahrungsorts und/oder zur Abtastung des Identifikators erfaßt wird,
- ein das erfaßte elektronische Bild kennzeichnendes Signal über eine Mobilkommunikationsschnittstelle an eine Auswerteeinrichtung übermittelt wird,
- anhand des übermittelten Signals ein dem Aufbewahrungsort und/oder Identifikator zugeordneter Bestandsindikator durch die Auswerteeinrichtung angepaßt wird.

2. Verfahren nach Anspruch 1, bei dem
bei einer Entnahme eines aufbewahrten Gegenstandes und/oder Gutes ein diesen Vorgang kennzeichnendes Signal über eine Mobilkommunikationsschnittstelle an die Auswerteeinrichtung übermittelt und der zugeordnete Bestandsindikator angepaßt wird.

3. Verfahren nach einem der Ansprüche 1 oder 2, bei dem
bei einer Einlagerung eines aufzubewahrenden Gegenstandes und/oder Gutes am Aufbewahrungsort der aufbewahrte Gegenstand und/oder das aufbewahrte Gut dem Aufbewahrungsort und/oder dem optisch abtastbaren Identifikator zugeordnet und ein diesen Vorgang kennzeichnendes Signal über eine Mobilkommunikationsschnittstelle an die Auswerteeinrichtung übermittelt und der zugeordnete Bestandsindikator angepaßt wird.

4. Verfahren nach einem der Ansprüche 1 bis 3, bei dem
eine Bestandsermittlung anhand von Angaben über einen Aufbewahrungsort, eine Anzahl von Aufbewahrungseinrichtungen am Aufbewahrungsort und eine Anzahl von Gegenständen je Aufbewahrungseinrichtung erfolgt.

5. Verfahren nach einem der Ansprüche 1 bis 4, bei dem
eine Bestandsermittlung anhand von Angaben über einen Aufbewahrungsort, eine Anzahl von Aufbewahrungseinrichtungen am Aufbewahrungsort und einen Füllstand einer Aufbewahrungseinrichtung erfolgt.

6. Verfahren nach Anspruch 5, bei dem
zur Ermittlung des Füllstands einer zumindest teilweise transparenten Aufbewahrungseinrichtung anhand einer elektronischen Kamera eine Hell-/Dunkel-Grenze zwischen einem gefüllten und einem leeren Teilbereich der zumindest teilweise transparenten Aufbewahrungseinrichtung erfaßt wird.

7. Verfahren nach einem der Ansprüche 1 bis 6, bei dem
der Aufbewahrungsort einem Abnehmer und die Auswerteeinrichtung einem Lieferanten innerhalb eines KANBAN-Regelkreises zugeordnet ist.

8. Ressourcenplanungssystem mit
- einer Prozessoreinheit,
- einem Arbeitsspeicher,
- einem Mittel zur Zuordnung eines aufbewahrten Gegenstandes und/oder Gutes zu einem Aufbewahrungsort und/oder optisch abtastbaren Identifikator, durch den der Gegenstand und/oder das Gut identifizierbar ist,
- einem Mittel zur Veranlassung einer Erfassung eines elektronischen Bildes zur Ermittlung einer Belegung des Aufbewahrungsorts und/oder zur Abtastung des Identifikators zu einem vorgebbaren Zeitpunkt,
- einem Mittel zur Veranlassung einer Übermittlung eines das erfaßte elektronische Bild kennzeichnenden Signals über eine Mobilkommunikationsschnittstelle an eine Auswerteeinrichtung,
- einem Mittel zur Veranlassung einer Anpassung eines dem Aufbewahrungsort und/oder Identifikator zugeordneten Bestandsindikators durch die Auswerteeinrichtung anhand des übermittelten Signals.

9. Computerprogramm für ein Ressourcenplanungssystem, das in einen Arbeitsspeicher des rechnergestützten Ressourcenplanungssystems ladbar ist und zumindest einen Codeabschnitt aufweist, bei dessen Ausführung
- einem aufbewahrten Gegenstand und/oder Gut ein Aufbewahrungsort und/oder optisch abtastbarer Identifikator zugeordnet wird, durch den der Gegenstand und/oder das Gut identifizierbar ist,
- zu einem vorgebbaren Zeitpunkt eine Erfassung eines elektronischen Bildes zur Ermittlung einer Belegung des Aufbewahrungsorts und/oder zur Abtastung des Identifikators veranlaßt wird,
- eine Übermittlung eines das erfaßte elektronische Bild kennzeichnenden Signals über eine Mobilkommunikationsschnittstelle an eine Auswerteeinrichtung veranlaßt wird,
- eine Anpassung eines dem Aufbewahrungsort und/oder Identifikator zugeordneten Bestandsindikators durch die Auswerteeinrichtung anhand des übermittelten Signals veranlaßt wird,
wenn das Computerprogramm in dem Ressourcenplanungssystem abläuft.

10. Computerprogramm eine Sensoreinrichtung, das in einen Arbeitsspeicher des rechnergestützten Sensoreinrichtung ladbar ist und zumindest einen Codeabschnitt aufweist, bei dessen Ausführung
- zu einem vorgebbaren Zeitpunkt eine Erfassung eines elektronischen Bildes zur Ermittlung einer Belegung eines Aufbewahrungsorts und/oder zur Abtastung eines Identifikators für einen Gegenstand und/oder Gut veranlaßt wird,
- eine Übermittlung eines das erfaßte elektronische Bild kennzeichnenden Signals über eine Mobilkommunikationsschnittstelle an eine Auswerteeinrichtung veranlaßt wird,
wenn das Computerprogramm in der Sensoreinrichtung abläuft.
